## Europäisches Patentamt
## European Patent Office
## Office européen des brevets

(19)

(11) Veröffentlichungsnummer: **0 029 937**
**B1**

(12) **EUROPÄISCHE PATENTSCHRIFT**

(45) Veröffentlichungstag der Patentschrift: **13.06.84**

(51) Int. Cl.³: **A 23 C 11/04**

(21) Anmeldenummer: **80106938.6**

(22) Anmeldetag: **10.11.80**

(54) Fett-Trockenemulsion und Verfahren zu seiner Herstellung.

(30) Priorität: **29.11.79 DE 2948150**

(43) Veröffentlichungstag der Anmeldung:
**10.06.81 Patentblatt 81/23**

(45) Bekanntmachung des Hinweises auf die Patenterteilung:
**13.06.84 Patentblatt 84/24**

(84) Benannte Vertragsstaaten:
**AT BE CH DE FR GB IT LI NL**

(56) Entgegenhaltungen:
**DE - A - 1 792 614**
**DE - A - 2 814 772**
**DE - B - 1 239 551**
**GB - A - 2 022 392**

**Die Akte enthält technische Angaben, die nach dem Eingang der Anmeldung eingereicht wurden und die nicht in dieser Patentschrift enthalten sind.**

(73) Patentinhaber: **Meggle Milchindustrie GmbH & Co. KG**
**Megglestrasse 6**
**D-8094 Reitmehring (DE)**

(72) Erfinder: **Kuipers, Arie**
**Ahornstrasse 32**
**D-8094 Reitmehring (DE)**
Erfinder: **Becker, Herbert**
**Hocheckstrasse 4**
**D-8091 Edling (DE)**

(74) Vertreter: **Weickmann, Heinrich, Dipl.-Ing. et al,**
**Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska**
**Möhlstrasse 22**
**D-8000 München 86 (DE)**

Courier Press, Leamington Spa, England.

## Beschreibung

Die Erfindung betrifft eine saure caseinhaltige Fett-Trockenemulsion für den Einsatz in Lebensmitteln und Futtermitteln, insbesondere zur Herstellung von Mischaustauschern, und ein Verfahren zu ihrer Herstellung.

Es ist aus der Referatesammlung des Milchwirtschaftlichen Kongresses 1978, Seite 1059 bekannt, daß Emulsionen von caseinhaltigen Milchproduckten mit Fett bei pH-Werten um 3 instabil sind. Ferner ist es aus der DE—OS 22 25 744 bekannt, daß bei derartigen pH-Werten die das Restfett der Buttermilch enthaltende Emulsion destabilisiert wird und sich abscheidet. Ferner ist es bekannt, daß Milchaustauscher, welche Casein enthalten, unter sauren pH-Bedingungen ein grobes Koagulat abscheiden und dadurch die Tränke untauglich wird. Ein solcher Milchaustauscher wäre aber sehr erwünscht, weil er die Vorzüge der Sauertränke mit den Vorzügen vereinigen würde, welche durch eine Versorgung des Tiers mit dem Gesamtproteinkomplex der Milch gegeben sind. Gleichzeitig würde futtermittelrechtlichen Verordnungen Rechnung getragen, welche einen hohen Anteil an Magermilch in Milchaustauschern fordern.

Aus DE—OS 28 14 772 ist ein Verfahren zur Nutzbarmachung von Colostralmilch bekannt, bei dem die Colostralmilch mit einem sauren Molkeprodukt verschnitten wird so, daß ein pH-Wert von 3,5 bis 5,0 in der Lösung entsteht. Bei diesem Verfahren erhält man eine flüssige Emulsion.

Der Erfindung liegt Aufgabe zugrunde, dieses Problem zu lösen und eine saure caseinhaltige Fett-Trockenemulsion bereitzustellen, bei der weder eine Ausflockung des Caseins noch eine Abscheidung des Fettes auftritt. Ferner ist beabsichtigt, auf Basis solcher Emulsionen Milchaustauschertränken bereiten zu können, was bisher nur mit Milchaustauscher-Rezepturen ohne Casein zu bewerkstelligen war, wenn man die genannte Koagulatbildung vermeiden wollte.

Gelöst wird diese Aufgabe erfindungsgemäß durch ein Verfahren zur Herstellung einer sauren caseinhaltigen Fett-Trockenemulsion, welches dadurch gekennzeichnet ist, daß man den pH-Wert eines caseinhaltigen Milchprodukts auf 2,5 bis 3,7 absenkt unter Lösung des Casein, der sauren Lösung Fett bis zur Erzielung eines Gehalts von 10 bis 60%, bezogen auf die Trockenmasse der Mischung, zusetzt und die Mischung in eine Emulsion überführt, die Emulsion trocknet und die trockene Emulsion gegebenenfalls mit einer solchen Menge einer pH-regulierenden Substanz vermischt, daß der pH-Wert der rekonstituierten Tränke auf pH 3,8 bis 4,5 angehoben wird. Die Erfindung beruht auf der überraschenden Feststellung, daß beim angegebenen pH-Wert Caseinlösungen stabile Fettemulsionen zu bilden vermögen, welche sich sogar trocknen und rekonstituieren lassen und bei Wiederanhebung des pH- Werts in den für die Verwendung in Lebensmitteln oder bei der Fütterung geeigneten sauren Bereich stabil bleiben. Dies ist überraschend, da nach dem oben erwähnten Stand der Technik unter diesen Bedingungen mit einer Ausflockung des Caseins und mit einer Abscheidung des Fettes gerechnet werden mußte.

Die nach dem erfindungsgemäßen Verfahren erhaltene Trockenemulsion eignet sich besonders dafür, in Lebensmittelzubereitungen als Halbfabrikat verwendet zu werden. Unter Einhaltung der erfindungsgemäßen pH-Bereiche sion eignet sich besonders dafür, in Lebensmittelzubereitungen als Halbfabrikat verwendet zu werden. Unter Einhaltung der erfindungsgemäßen pH-Bereiche im Endprodukt ist ein stabiler Emulsionszustand gewährleistet. Insbesondere ist es möglich, beim Verwender eine Emulsion in Flüssig- oder in Trockenform anzuwenden, welche noch nicht im pH-Wert auf den Bereich von 3,8 bis 4,5 angehoben wurde, und diesen Bereich erst mit den bei der Verwendung angewandten Rezepturkomponenten zu bewerkstelligen.

Verwendet man die erfindungsgemäße Emulsion bei der Herstellung von Milchaustauschern, so eignet sich dieser besonders dafür, in Großstallungen als Kälbertränke verwendet zu werden. In derartigen Großstallungen wird die Kälbertränke nicht zu bestimmten Zeiten verabreicht, sondern steht jederzeit zum Verzehr bereit. Dies erfordert eine gute Haltbarkeit der Tränke, welche durch Einstellung eines sauren pH-Werts, gegebenenfalls unter Verwendung einer konservierenden Säure, erzielt wird. Eine weitere Anforderung an derartige Tränken besteht darin, daß sie auch kalt, d. h. bei Temperaturen unterhalb der Körpertemperatur, verfütterbar sein müssen, d. h. eine für den Verzehr durch das Kalb beköm-liche und ansprechende Konsistenz und Geschmack aufweisen. Auch diese Bedingung wird durch den erfindungsgemäßen Milchaustauscher erfüllt, Setzt man einer Tränke erst vor der Verabreichung eine Konservierungssäure, wie Ameisensäure, zu, so bereitet dies technologische Schwierigkeiten, da am Verwendungsort die gleichmäßige Zugabe der Säure schwer durchführbar ist und Ameisensäure selbst flüchtig ist und daher für die Verwendung in einem Trockenprodukt ausscheidet und außerdem Geruchsbelästigungen und sonstige Gefahren mit sich bringt.

Beim erfindungsgemäßen Verfahren können als caseinhaltige Milchprodukte beispielsweise Magermilch, Magermilchkonzentrat, Mager-milchpulver, Buttermilch, Buttermilch-konzentrat, Buttermilchpulver, caseinstaub- oder käsestaubhaltige Molkeprodukte, Casein oder Kombinationen davon verwendet werden. Soweit die Produkte pulverförmig sind, werden sie vorher oder im Verlauf des Prozesses durch Zusatz von Wasser rekonstituiert.

Die pH-Wertabsenkung in den Bereich von 2,5 bis 3,7 erfolgt bei der caseinhaltigen Mischung unter solchen Bedingungen, daß eine Caseinausfällung bei Durchlaufen des isoelektrischen Punkts entweder vermieden wird oder nicht zu einer Härtung der Eiweißpartikel führt, die die anschließende Wiederauflösung verhindert. Dies kann beispeilsweise erreicht werden durch Vorlegen der Säure und Zugabe des flüssigen Milchprodukts zu dieser oder durch vorsichtigen Zusatz des Säuerungsmittels bei ausreichend niedriger Temperatur, die zweckmäßig unter 20° C liegt. Soweit eine Ausfällung von Casein bei der pH-Wertabsenkung auftritt, kann sie durch vorsichtige Erwärmung wieder in Lösungsform überführt werden. Als Caseinlösung werden dabei im Rahmen der Erfindung echte Lösungen sowie Quasi-Lösungen, die keine Suspensionen fester Caseinteilchen darstellen, verstanden.

Als Säuerungsmittel für die pH-Wertabsenkung können Mineralsäuren, wie Salzsäure und Phosphorsäure, organische Säuren, wie Ameisensäure und deren Homologe mit bis zu drei C-Atomen, Genußsäuren, wie z. B. Zitronensäure, Fumarsäure, Adipinsäure oder/und Glucono-$\gamma$-lacton, saure Milch- oder Molkeerzeugnisse, die insbesondere durch Kationenentzug über Ionenaustauscher oder Elektrodialyse erhalten werden, verwendet werden.

Der erhaltenen sauren Lösung wird Fett in der oben angegebenen Menge zugesetzt und dann emulgiert. Als Fett eignen sich tierische und pflanzliche Fette sowie Gemische derselben. Eine gewisse Fettmenge kann auch bereits im eingesetzten caseinhaltigen Milchprodukt enthalten sein. Soweit sie sich bei der pH-Wertabsenkung abgeschieden hat, wird sie zusammen mit der zugesetzten Fettmenge emulgiert.

Die so erhaltene Emulsion wird getrocknet unter Bildung eines pulverförmigen Produkts, welches nunmehr einen Fettgehalt von 10 bis 60, vorzugsweise bis 40 % i.T aufweist, Es bildet sich bei der Rekonstitution durch Zusatz von Wasser ser erneut eine homogene und stabile Emulsion, in welcher auch das Casein gelöst vorliegt.

In vielen Fällen kann es zweckmäßig sein, die Emulsion vor der Durchführung weiterer Arbeitsschritte noch zu homogenisieren, um eine besonders gleichmäßige Tröpfchenverteilung zu erzielen.

Die erhaltene, gegebenenfalls homogenisierte fett-Trockenemulsion kann durch Zusatz einer pH-regulierenden Substanz auf den pH-Wert von 3,8 bis 4,5 angehoben werden. Als pH-Wert regulierende Substanz eignen sich hierzu alkalisch reagierende Puffersalze, beispielsweise Alkalioder Erdalkalisalze von Konservierungssäuren, Milchoder Molkeprodukte sowie sonstige, eine ausreichende Pufferkapazität aufweisende Bestandteile von Mischfuttermitteln, wie z. B. Mineralstoffvormischungen, Getreideprodukte und dergleichen. Typische Beispiele für geeignete Salze von Konservierungssäuren sind die Natriumoder Calciumsalze von Ameisensäure oder Propionsäure oder anderen üblichen Konservierungssäuren. Die pH-Wertanhebung erfolgt zweckmäßig bei Temperaturen unter 35°C, vorzugsweise unter 20°C. Werden die fett-Trockenemulsionen zur Bereitung von Milchaustauschern verwendet, so bedeutet die solchermaßen herbeigeführte pH-Anhebung keine willkürliche Belastund des Tiers mit Salzen, welche die Osmolarität des Futters anheben, weil der pH-Ausgleich mit wertvollen und notwendigen Stoffen erfolgt. Bei Lebensmittelzubereitungen kann die pH-Anhebung über die Wahl der Rezepturkomponenten erfolgen, soweit es sich nicht um Stoffe handelt, welche eine Destabilisierung der Emulsion von vornherein bewirken.

Erfindungsgemäß erhaltenen sauren, caseinhaltigen fett-Trocken-emulsionen können noch weitere, bei Milchaustauschern übliche Zusatzstoffe, wie Mineralsalze, Vitaminmischungen, Getreideprodukte und dergleichen zugesetzt werden. Diese Zusatzmittel und die in Betracht kommenden Mengen sind dem Fachmann bekannt und bedürfen hier keiner näheren Beschreibung. Durch die Erfindung wird eine saure caseinhaltige Emulsion erreicht, welche stabil ist gegen Ausflockung, Abscheidung des Fettes und mikrobiologische Veränderungen, gut vertragen wird und sich einfach anwenden läßt.

Die folgenden Beispiele erläutern die erfindung weiter.

### Beispiel 1

Herstellung einer sauren, caseinhaltigen fett-Trockenemulsion auf Basis Sauerrahmbuttermilch.

100 kg Buttermilch (8,4 kg Trockenmasse, 3,0 kg Protein, 4,0 kg Milchzucker, 1,4 kg Minerale und Säuren, pH 4,5) werden mit 150 kg kationenaustauschgesäuerter Molke (9,3 kg Trockenmasse, 1,2 kg Protein, 7,4 kg Milchzukker, 0,7 kg Minerale und Säuren, pH 1,9) vermischt. Die Mischung stellt nach kurzem Erwärmen und Rühren eine homogene Lösung von pH 3,3 dar. Sie wird eingedampft auf eine Konzentration von 35% Trockenmasse. Der pH-Wert fällt dabei auf 2,9.

7 kg Pflanzenfettmischung werden in dieses Konzentrat (50 kg) einemulgiert unter intensivem Rühren. Diese Emulsion wird sprühgetrocknet zu einem Pulver mit 28% Fett, 17% Protein, 45% Milchzucker, 8% Minerale und Säuren, 2% Wasser.

Die Trockenemulsion konnte durch Zumischen von Magermilchpulver, Süßmolkepulver oder anderen pH-regulierenden Rezepturkomponenten auf pH-Bereiche zwischen 3,8 und 4,5 verschnitten werden und lieferte dann beim Rekonstituieren mit Wasser eine stabile feindisperse Mischung.

## Beispiel 2

In 560 kg teilentzuckertes Molkekonzentrat (40% Trockenmasse, 16% Lactose, 10% Protein, 8% Asche), vermischt mit 260 l 10%ige Salzsäure, werden 1250 kg Magermilchkonzentrat (40% Trockenmasse, 22% Lactose, 14% Protein, 3,2% Asche, pH 6,5) unter intensivem Rühren eingemischt, bis eine homogene Dispersion entsteht. Diese Dispersion wird mit 250 kg einer Fettmischung aus 50 kg Rinderfett, 22,5 kg Schweinefett, 22,5 kg Kokosfett, 3,7 kg Lecithin und 1,3 kg Monostearat, stabilisiert mit Butylhydroxytoluol, unter leichter Erwärmung emulgiert. Diese Mischung wird in üblicher Weise auf einem Sprühturm getrocknet zu einem Pulver mit 23% Protein, 36% Lactose, 11% Asche, 25% Fett, 2% Wasser, pH der 10%igen Lösung 3,0.

540 Kg des Pulvers werden gemischt mit 330 kg Magermilchpulver, 65 kg Süßmolkepulver, 30 kg Quellmehl, 20 kg Calciumformiat und 15 kg Vitamin-Spurenelement-Vormischung. Der fertige Milchaustauscher hat einen pH in 10%iger Lösung von 4,1.

## Beispiel 3

Es wird eine Emulsion, ausgehend von 560 kg Teilentzukkertes Molkekonzentrat, 260 l 10%ige Salzsäure, 1250 kg Magermilchkonzentrat und 250 kg Fett, wie in Beispiel 2 beschrieben, hergestellt. In diese Emulsion, welche einen pH von 2,5 hat, werden 1525 kg Magermilchkonzentrat unter intensivem Rühren eingemischt. Der pH-Wert steigt dabei auf 3,8. Die Mischung wird sprühgetrocknet. Der pH-Wert des Pulvers beträgt, in 10%iger Auflösung gemessen, 4,0.

920 kg des Trockenprodukts werden vermischt mit 30 kg Quellmehl, 20 kg Calciumformiat, 15 kg Vitamin-Spurenelement-Vormischung und 15 kg Guaran. Der fertige Milchaustauscher hat einen pH-Wert, in 10%iger Auflösung gemessen, von 4,2.

## Beispiel 4

In 360 l 10%iger Salzsäure werden 2410 kg Magermilchkonzentrat eingerührt, bis eine homogene Dispersion gebildet ist. Diese Dispersion wird mit 333 kg Fettmischung versetzt und durch intensives Mischen zu einer Emulsion gebracht. Die Mischung hat einen pH von 2,6. Die Emulsion wird sprühgetrocknet, wobei ein Pulver mit 25% Protein, 40% Lactose, 6% Asche und 25% Fett anfällt. Der pH des Pulvers ist 3,1, in 10%iger Auflösung gemessen.

600 kg des Pulvers werden mit 170 kg Magermilchpulver, 150 kg Süßmolkepulver, 20 kg Calciumformiat, 30 kg Quellmehl, 15 kg Vitamin-Spurenelement-Vormischung und 15 kg Guaran vermischt. Die fertige Mischung ergibt einen Milchaustauscher mit pH-Wert 4,1.

## Patentansprüche

1. Verfahren zur Herstellung einer sauren, caseinhaltigen Fett-Trockenemulsion, dadurch gekennzeichnet, daß man den pH-Wert eines caseinhaltigen Milchprodukts auf 2,5 bis 3,7 absenkt unter Lösung des Caseins, der sauren Lösung Fett bis auf einen Gehalt von 10 bis 60%, bezogen auf die Trockenmasse, zusetzt und in eine Emulsion überführt, die Emulsion trocknet und die trockene Emulsion gegebenenfalls mit einer solchen Menge einer pH-regulierenden Substanz vermischt, daß der pH-Wert der rekonstituierten Emulsion auf 3,8 bis 4,5 angehoben wird.

2. Verfahren nach Anspruch 1, dadurch gekennzeichnet, daß man als caseinhaltiges Milchprodukt Magermilch, Buttermilch, deren Konzentrate oder eine Caseinlösung, verwendet.

3. Verfahren nach Anspruch 1 oder 2, dadurch gekennzeichnet, daß man zur pH-Wertabsenkung eine eßbare Säure, Ameisensäure oder eine gesäuertes Milch- oder Molkeprodukt verwendet.

4. Verfahren nach Anspruch 3, dadurch gekennzeichnet, daß man ein durch Kationenverminderung gesäuertes Milch- oder Molkeprodukt verwendet.

5. Verfahren nach einem der vorhergehenden Ansprüche, dadurch gekennzeichnet, daß die erhaltene Emulsion vor einer Anhebung des pH-Werts homogenisiert wird.

6. Verfahren nach einem der vorhergehenden Ansprüche, dadurch gekennzeichnet, daß zur pH-Wertanhebung ein Puffersalz, eine Salz einer Konservierungssäure oder/und eine caseinhaltiges Milchprodukt, Molke- oder Molkeerzeugnis verwendet wird.

7. Fett-Trockenemulsion dadurch gekennzeichnet, daß sie nach dem Verfahren eines der Ansprüche 1 bis 6 hergestellt ist.

8. Verwendung der fett-Trockenemulsionen gemäß Anspruch 7, zur Herstellung von Milchaustauschern.

## Revendications

1. Procédé de préparation d'une émulsion sèche de matière grasse acide contenant de la caséine, caractérisé en ce qu'on abaisse le pH d'un produit laitier contenant de la caséine de 2,5 à 3,7 avec dissolution de la caséine, on ajoute de la matière grasse à la solution acide jusqu'à une teneur de 10 à 60%, par rapport à la masse sèche et on transforme en une émulsion. On sèche l'émulsion et on mélange le cas échéant l'émulsion sèche avec une quantité d'une substance régulant le pH telle que le pH de l'émulsion reconstituée soit relevéde 3,8 à 4,5.

2. Procédé suivant la revendication 1, caractérisé en ce qu'on utilise comme produit laitier contenant de la caséine du lait écrémé, du babeurre, leurs concentrés ou une solution de caséine.

3. Procédé suivant l'une quelconque des revendications 1 ou 2, caractérisé en ce qu'on utilise pour l'abaissement du pH un acide comestible, l'acide formique ou un produit à base de lait ou de petit lait acidifié.

4. Procédé suivant la revendication 3, caractérisé en ce qu-on utilise un produit de lait ou de petit lait acidifié par abaissement des cations.

5. Procédé suivant l'une quelconque des revendications précédentes, caractérisé en ce qu'on homogénéise l'émulsion obtenue avant une élévation du pH.

6. Procédé suivant l'une quelconque des revendications précédentes, caractérisé en ce que pour élever le pH, on utilise un sel tampon, un sel d'un acide de conservation, ou/et un produit laitier contenant de la caséine, un produit de lait ou de petit lait.

7. Emulsion sèche de matière grasse, caractérisée en ce qu'elle est préparée par le procédé selon l'une quelconque des revendications 1 à 6.

8. Utilisation des émulsions sèches de matière grasse selon la revendication 7 pour la préparation de substitut du lait.

## Claims

1. Process for the preparation of an acid, casein-containing fatty dry emulsion, characterised in that the pH value of a casein-containing milk product is lowered to between 2.5 and 3.7, the casein being dissolved, fat is added to the acid solution up to a content of 10 to 60% in relation to the dry mass, and is converted into an emulsion, the emulsion is dried and the dry emulsion optionally mixed with such a quantity of a pH-adjusting substance that the pH value of the reconstituted emulsion is raised to between 3.8 and 4.5.

2. Process according to claim 1, characterised in that as casein-containing milk product there is used skim milk, butter milk, concentrates thereof or a casein solution.

3. Process according to claim 1 or 2, characterised in that for lowering the pH value there is used an edible acid, formic acid or an acidified milk product or whey product.

4. Process according to claim 3, characterised in that a milk product or whey product acidified by cation reduction is used.

5. Process according to one of the preceding claims, characterised in that the emulsion obtained is homogenised before the pH value is raised.

6. Process according to one of the preceding claims, characterised in that to raise the pH value there is used a buffer salt, a salt of a preserving acid and/or a casein-containing milk product, whey or whey product.

7. Fatty dry emulsion, characterised in that it is prepared in accordance with the process according to one of claims 1 to 6.

8. Use of the fatty dry emulsion according to claim 7 for the preparation of milk substitutes.